# EUROPEAN PATENT APPLICATION

(11) **EP 3 404 754 A1**
(43) Date of publication of application: **21.11.2018**
(21) Application number: 18158085.3
(22) Date of filing: 22.02.2018
(51) Int. Cl.: H01M 4/62, H01M 4/36, H01M 4/505, H01M 4/525, H01M 4/131, H01M 4/139, H01M 4/1391, H01M 10/0525

(54) **ELECTRODE FOR SECONDARY BATTERY, SECONDARY BATTERY, BATTERY PACK, AND VEHICLE**

(30) Priority: 19.05.2017 JP 2017099876
(71) Applicant: Kabushiki Kaisha Toshiba, Minato-ku, Tokyo (JP)
(72) Inventor: SASAKAWA, Tetsuya, Tokyo (JP); TAKAMI, Norio, Tokyo (JP)
(74) Representative: Hoffmann Eitle

(57) **Abstract**

An electrode for a secondary battery include
a positive electrode active material layer including a positive electrode active material granulated body comprising first positive electrode active material particles and second positive electrode active material particles of which surfaces are coated with carbon.
An occupancy rate of the first positive electrode active material particles and the second positive electrode active material particles in the positive electrode active material granulated body is 70% or more and 98% or less.

## Description

### CROSS-REFERENCE TO RELATED APPLICATIONS

This application is based upon and claims the benefit of priority from Japanese Patent Application No. 2017-099876, filed on May 19, 2017, and the entire contents of which are incorporated herein by reference.

### FIELD

Embodiments relate to an electrode for a secondary battery, a secondary battery, a battery pack, and a vehicle.

### BACKGROUNG

As the application to an on-vehicle use such as microhybrid car, idling stop system, or the like and a stationary use progresses, a secondary battery like nonaqueous electrolyte battery using lithium ions is expected to have even higher capacity, longer service life, and higher output. Lithium titanium composite oxide has a small volume change that is accompanied with charge and discharge, and therefore has excellent cycle characteristics. Furthermore, in principle, the lithium inserting and extracting reaction of lithium titanium composite oxide hardly allows precipitation of the lithium metal, and thus there is only a small performance deterioration even when charge and discharge is repeated at high current.

To increase an energy density of a lithium ion battery, as a positive electrode active material, a lithium nickel composite oxide which has a high-capacity is used.

However, particles of the lithium nickel composite oxide are cracked due to the volume change when the charge/discharge cycle is carried out, in particular, under the high temperature environment.

For this reason, there is a problem in that an electron conduction path is divided and therefore the capacity is lowered.

It is possible to reduce the division of the electron conduction path and improve the cycle deterioration by coating the surface of the lithium nickel composite oxide with carbon.

However, since the carbon coating hinders the lithium ion conduction on the surface of the active material, the output characteristics of the cell are degraded.

### BRIEF DESCRIPTION OF THE DRAWINGS

Figs. 1A and 1B are schematic cross-sectional views of a thin type nonaqueous electrolyte battery.
Figs. 2A and 2B are SEM images of a positive electrode active material granulated body.
Fig. 3 is an exploded perspective view of a battery pack.
Fig. 4 is a block diagram of an electric circuit of the battery pack.
Fig. 5 is a schematic diagram of a vehicle equipped with the battery pack.
Fig. 6 is a schematic diagram of an electric vehicle which is an example of vehicles.

### DETAILED DESCRIPTION

Hereinafter, embodiments of the present invention will be described below with reference to the drawings. Like reference numerals designate like elements. It should be noted that drawings are schematically or conceptually illustrated, and relationships of thicknesses and widths of each part, ratio coefficients of sizes between the parts and the like are not necessarily the same as the actual ones. In addition, even in the case of representing the same part, dimensions and ratio coefficients of the parts may be differently represented on the drawings.

### (First Embodiment)

As a secondary battery, an example of a nonaqueous electrolyte battery will be described.

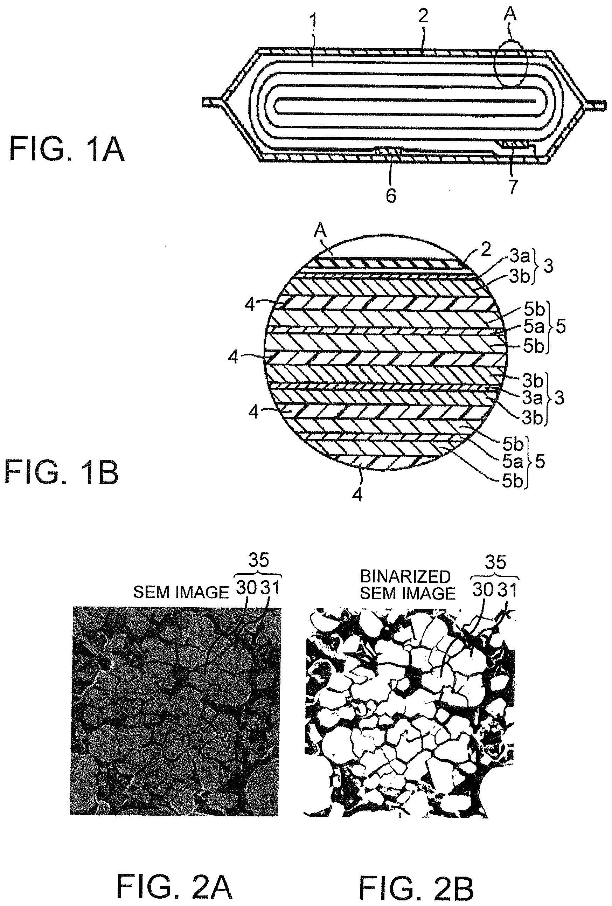

Fig. 1A is a schematic cross-sectional view of a nonaqueous electrolyte battery, and Fig. 1B is an enlarged view of part A illustrated in Fig. 1A.

Referring to Fig. 1A, a flat wound electrode group 1 is received in a baglike outer casing member 2, which is made of a laminate film, having an aluminum foil interposed between two sheets of resin layers as the outer casing member 2. Referring to Fig. 1B, the flat wound electrode group 1 is formed by spirally winding a laminate in which a negative electrode 3, a separator 4, a positive electrode 5, and a separator 4 are laminated in order from an outside and press molding the laminate.

Referring to Fig. 1B, the outermost negative electrode 3 is configured of a negative electrode active material layer 3b that is formed on one surface of an inner surface side of a negative electrode current collector 3a. A negative electrode 3 other than the outermost negative electrode 3 is configured of the negative electrode active material layers 3b that are formed on both surfaces of the negative electrode current collector 3a.

The positive electrode 5 is configured of positive electrode active material layers 5b that are formed on both surfaces of a positive electrode current collector 5a.

A negative electrode terminal 6 is connected to the negative electrode current collector 3a of the outermost negative electrode 3. A positive electrode terminal 7 is connected to the positive electrode current collector 5a of the positive electrode 5.

The negative electrode terminal 6 and the positive electrode terminal 7 extend from an opening portion of the baglike outer casing member 2 to the outside. A liquid nonaqueous electrolyte is injected from the opening portion of the baglike outer casing member 2. An opening of baglike outer casing member 2 is heat sealed in a state where the negative electrode terminal 6 and the positive electrode terminal 7 extend to the outside, such that the wound electrode group 1 and the liquid nonaqueous electrolyte are completely sealed.

For example, the negative electrode terminal 6 is made of a material having electric stability and conductivity in a range in which a potential for lithium ion metal is 1V or more and 3V or less. The negative electrode terminal 6 is made of an aluminum alloy including one element of, for example, Mg, Ti, Zn, Mn, Fe, Cu, and Si. The negative electrode terminal 6 may be made of an aluminum alloy including plural elements of, for example, Mg, Ti, Zn, Mn, Fe, Cu, and Si. In order to reduce a contact resistance with the negative electrode current collector 3a, it is preferable that the negative electrode terminal 6 is made of the same material as the negative electrode current collector 3a.

The positive electrode terminal 7 is made of a material having electric stability and conductivity in a range in which a potential for lithium ion metal is 3V or more and 4.5V or less. The positive electrode terminal 7 is made of an aluminum alloy including at least one element of Mg, Ti, Zn, Mn, Fe, Cu, and Si. The positive electrode terminal 7 may be made of an aluminum alloy including plural elements of Mg, Ti, Zn, Mn, Fe, Cu, and Si. In order to reduce a contact resistance with the positive electrode current collector 5a, it is preferable that the positive electrode terminal 7 is made of the same material as the positive electrode current collector 5a.

Hereinafter, the negative electrode 3, the positive electrode 5, the nonaqueous electrolyte, the separator 4, the outer casing member 2, the positive electrode terminal 7, and the negative electrode terminal 6 that are used in the nonaqueous electrolyte battery of the present embodiment will be described in detail.

### (Negative Electrode)

The negative electrode 3 includes the negative electrode current collector 3a and the negative electrode active material layer 3b.

The negative electrode current collector 3a is preferably made of an aluminum foil or an aluminum alloy foil including one element of Mg, Ti, Zn, Mn, Fe, Cu, and Si, which is electrochemically stable in a range in which a potential is more than 1.0V.

The negative electrode active material layer 3b includes a negative electrode active material, a conductive agent, and a binder. The negative electrode active material layer 3b is formed on one surface or both surfaces of the negative electrode current collector 3a. In a mixing ratio of the negative electrode active material, the conductive agent, and the binder, it is preferable that the negative electrode active material is in the range of 70 mass% or more and 96 mass% or less, the negative electrode conductive agent is in the range of 2 mass% or more and 28 mass% or less, and the binder is in the range of 2 mass% or more and 28 mass% or less. If the mixing ratio of the conductive agent is less than 2 mass%, there is a risk that the current collecting performance of the negative electrode active material layer 3b deteriorates and the large current characteristic of the nonaqueous electrolyte battery deteriorates. If the mixing ratio of the binder is less than 2 mass%, there is a risk that the binding property between the negative electrode active material layer 3b and the negative electrode current collector 3a deteriorates and the cycle characteristics deteriorate. From the viewpoint of the high capacity of the nonaqueous electrolyte battery, it is preferable that the mixing ratio of each of the conductive agent and the binder is 28 mass% or less.

As the negative electrode active material layer 3b, a carbonaceous material, a metal oxide, a metal sulfide, a metal nitride, a metal alloy, and the like, which insert and extract lithium ions are exemplified.

The conductive agent is, for example, a carbonaceous material such as acetylene black, carbon black, graphite, carbon nanofiber, and carbon nanotube. The conductive agent may use the carbonaceous material alone, or may use a plurality of carbonaceous materials.

The binder binds the active material, the conductive agent, and the current collector. The binder is, for example, polytetrafluoroethylene (PTFE), polyvinylidene fluoride (PVdF), fluorine-based rubber, acrylic resin, and carboxymethyl cellulose.

The negative electrode 3 is prepared, for example, by the following method. Slurry is prepared by suspending the negative electrode active material, the conductive agent, and the binder in a solvent. The slurry is applied on one surface or both surfaces of the negative electrode current collector 3a and dried to form the negative electrode active material layer 3b. Thereafter, a press is performed. Alternatively, it is also possible that the negative electrode active material, the conductive agent and the binder are formed in a pellet shape and used as the negative electrode active material layer 3b.

As the above-mentioned electrolytic solution, for example, a general nonaqueous electrolytic solution including LiPF₆ or LiBF₄ as Li salt and a mixed solvent of propylene carbonate (PC), ethylene carbonate (EC), diethyl carbonate (DEC), dimethyl carbonate (DMC) or the like as an organic solvent is shown.

### (Positive Electrode)

The positive electrode 5 includes the positive electrode current collector 5a and the positive electrode active material layer 5b.

The positive electrode active material layer 5b includes the positive electrode active material, the conductive agent, and the binder. The positive electrode active material layer 5b is formed on one surface or both surfaces of the positive electrode current collector 5a.

The positive electrode active material includes LiₓMO₂ (0 ≤ x ≤ 1.33). M is at least one element selected from the group consisting of Ni, Co, Mn, and Al.

Fig. 2A illustrates a scanning electron microscopy (SEM) image of a cross section of the positive electrode active material granulated body 35 included in the positive electrode active material layer 5b, and Fig. 2B is a view representing the SEM image in black and white (binarized SEM image).

A magnification of the SEM image in Fig. 2A is 5000 times. Referring to Fig. 2A, the positive electrode active material granulated body 35 includes voids. The positive electrode active material granulated body 35 is made of a plurality of first positive electrode active material particles 30 and a plurality of second positive electrode active material particles 31. It should be noted that the first positive electrode active material particle 30 and the second positive electrode active material particle 31 may be collectively referred to as the positive electrode active material.

The positive electrode active material granulated body 35 is made of the plurality of first positive electrode active material particles 30 and the second positive electrode active material particles 31 existing on an outer circumference of an aggregated body of the plurality of first positive electrode active material particles 30. The portions of the voids of the positive electrode active material granulated body 35 are shown by a black part of the SEM image illustrated in Fig. 2A. The positive electrode active material granulated body 35 has substantially a spherical shape.

A surface of the positive electrode active material granulated body 35 is coated with a carbon layer. In other words, a part of the surface of the second positive electrode active material particle 31 is coated with the carbon layer. In contrast, since the second positive electrode active material particle 31 exists on the outer circumference of the first positive electrode active material particle 30, the surface of the first positive electrode active material particle 30 does not have the carbon layer. The structure described above can be prepared by coating the carbon layer on the surface of the positive electrode active material granulated body. The second positive electrode active material particle 31 is disposed on at least a part of the surface of the first positive electrode active material particle 30. It is possible to suppress the resistance between the positive electrode active material layer 5b and the positive electrode current collector 5a by disposing the second positive electrode active material particle 31 on at least a part of the surface of the first positive electrode active material particle 30. However, it does not exclude the case in which carbon exists on a part of the surface of the first positive electrode active material particle 30. In this case, the amount of carbon on the surface of the first positive electrode active material particle 30 is smaller than that of the second positive electrode active material particles 31.

In the positive electrode active material granulated body 35, the occupancy rate of the first positive electrode active material particle 30 and the second positive electrode active material particle 31 is preferably 70% or more and 98% or less. More preferably, the occupancy rate of the first positive electrode active material particle 30 and the second positive electrode active material particle 31 is 80% or more and 95% or less. If the occupancy rate of the first positive electrode active material particle 30 and the second positive electrode active material particle 31 is smaller than 70%, the cycle life of the battery pack using the positive electrode 5 will be reduced. If the occupancy rate of the first positive electrode active material particle 30 and the second positive electrode active material particle 31 is larger than 98%, the output density of the battery pack using the positive electrode 5 will be reduced. By setting the occupancy rate of the first positive electrode active material particle 30 and the second positive electrode active material particle 31 to be in the range described above, it is possible to form the electron conduction path within the positive electrode active material layer 5b while suppressing the lowering in the lithium ion conduction.

In addition, in the positive electrode active material granulated body 35, the ratio of the number of second positive electrode active material particles 31 to the total number of first positive electrode active material particles 30 and the second positive electrode active material particle 31 ranges preferably from 0.2 to 0.8, and more preferably from 0.4 to 0.6. When the number of second positive electrode active material particles 31 is smaller than the above range, the electron conduction path between the carbon layers coated on the second positive electrode active material particles 31 is not sufficiently ensured. For this reason, if the volume expansion/shrinkage of the positive electrode active material layer 5b accompanied by the charge/discharge cycle occurs, there is a risk that the isolated positive electrode active material particles, which do not contribute to the charging/discharging may be generated. If the number of second positive electrode active material particles 31 is larger than the above-mentioned range, a coverage factor of the carbon layer on the surface of the positive electrode active material granulated body 35 becomes high, such that there is a risk that the lithium ion conduction may be hindered and the output characteristics of the secondary battery may deteriorate.

It is preferable that the mixing is made so that the amount of the positive electrode active material (or total amount of positive electrode active material and lithium inserting material) in the positive electrode active material layer 5b is 80 mass% or more and 96 mass% or less. It is preferable that the conductive agent is mixed at 3 mass% or more and 19 mass% or less. It is preferable that the binder is mixed at 1 mass% or more and 17 mass% or less.

Considering the conductivity of the positive electrode 5, the amount of conductive agent is preferably set to be 3 mass% or more. If the amount of the conductive agent is set to be 19 mass% or less, it is possible to reduce the decomposition of the nonaqueous electrolyte on the surface of the conductive agent under the high temperature.

By setting the amount of the binder to be 1 mass% or more, it is possible to sufficiently increase the binding property between the positive electrode active material layer 5b and the positive electrode current collector 5a. It is possible to reduce the mixed amount of the binder that is an insulating material in the positive electrode 5 by setting the amount of the binder to be 17 mass% or less. By reducing the mixed amount of the binder that is the insulating material in the positive electrode 5, it is possible to reduce the internal resistance of the positive electrode 5.

The conductive agent is, for example, a carbonaceous material such as acetylene black, carbon black, graphite, carbon nanofiber, and carbon nanotube. The conductive agent may use the carbonaceous material alone, or may use a plurality of carbonaceous materials.

The binder binds the active material, the conductive agent, and the current collector. The binder is, for example, polytetrafluoroethylene (PTFE), polyvinylidene fluoride (PVdF), fluorine-based rubber, acrylic resin, and carboxymethyl cellulose.

The positive electrode current collector 5a is preferably an aluminum foil or an aluminum alloy foil including one element of Mg, Ti, Zn, Mn, Fe, Cu, and Si. The positive electrode current collector 5a may be an aluminum foil or an aluminum alloy foil including plural elements of Mg, Ti, Zn, Mn, Fe, Cu, and Si. Considering the expansion and shrinkage of the positive electrode active material accompanied by the charging/discharging of the nonaqueous electrolyte battery, it is more preferable to use the positive electrode current collector 5a of the electrolytic foil of which the surface is roughly processed.

The positive electrode 5 is prepared, for example, by the following method. The positive electrode active material granulated body 35 is prepared using a tumbling fluidized bed granulation-coating machine. The granulation machine granulates the positive electrode active material granulated body using LiₓMO₂ (0 ≤ x ≤ 1.33, and M is at least one element selected from the group consisting of Ni, Co, Mn, and Al) particles which are the positive electrode active materials. By doing so, the positive electrode active material granulated body 35 is prepared. At this time, by spraying an aqueous solution in which the conductive agent and the binder are dispersed, onto the surface of the positive electrode active material granulated body 35, the carbon layer is formed on the surface of the positive electrode active material granulated body 35. In addition, the positive electrode active material granulated body 35 is baked.

Next, the slurry is prepared by suspending the positive electrode active material granulated body 35 having a carbon layer formed on the surface thereof in a solvent. The slurry is applied on one surface or both surfaces of the current collector and dried. Thereafter, the positive electrode 5 is prepared by pressing the dried slurry. When the positive electrode 5 is produced by the press, the positive electrode active material granulated body 35 included in the positive electrode 5 is divided into the first positive electrode active material particle 30 and the second positive electrode active material particle 31. Besides, it is also possible that the positive electrode active material, the conductive agent, and the binder can be formed into the pellet shape and used as the positive electrode active material layer 5b.

In the positive electrode active material granulated body 35 within the positive electrode for the secondary battery, the occupancy rate of the first positive electrode active material particle 30 and the second positive electrode active material particle 31 can be controlled by the following method. That is, it is preferable to set particle strength of the positive electrode active material granulated body 35 as a raw material to be 100 MPa or less, and more preferably 50 MPa or less. By increasing the temperature at the time of baking the positive electrode active material granulated body 35 and increasing a primary particle diameter, the particle strength of the positive electrode active material granulated body 35 can be kept low. Alternatively, by setting the temperature rising rate at the time of baking the positive electrode active material granulated body 35 to be slow and easily generating the voids in the positive electrode active material granulated body 35, the particle strength of the positive electrode active material granulated body 35 can be kept low. In this way, by suppressing the particle strength of the positive electrode active material granulated body 35 to be 100 MPa or less, the positive electrode active material granulated body 35 can be easily crushed when the positive electrode 5 is produced by the press. And thus, in the positive electrode active material granulated body 35 as the positive electrode 5, the occupancy rate of the first positive electrode active material particle 30 and the second positive electrode active material particle 31 can be controlled.

### <Analysis of Positive Electrode Active Material>

In the positive electrode active material granulated body 35, the occupancy rate of the first positive electrode active material particle 30 and the second positive electrode active material particle 31 can be calculated by the following method.

The secondary battery is disassembled to take out the positive electrode 5, and the positive electrode 5 is sufficiently washed with ethyl methyl carbonate (MEC), and then dried in vacuum. The cross section of the positive electrode active material layer 5b of the positive electrode 5 is cut out by argon ion milling. The cross section of the positive electrode active material layer 5b is observed by the SEM and the SEM image of the cross section of the positive electrode active material granulated body 35 included in the positive electrode active material layer 5b is photographed. For example, the SEM image of the cross section of the positive electrode active material granulated body 35 of Fig. 2A is photographed at a magnification of 5000 times.

Further, energy dispersive X-ray spectrometry (EDS) performs element analysis and element mapping on places similar to the SEM image of the cross section of the positive electrode active material granulated body 35. Components of carbon are confirmed by the element analysis, and the distribution of carbon on the cross section of the positive electrode active material granulated body 35 is confirmed by the element mapping. The positive electrode active material granulated body 35 in the positive electrode active material layer 5b is coated with carbon. Thus, in the positive electrode active material layer 5b, a substantially spherical portion of which the outer circumference is coated with carbon is defined as the positive electrode active material granulated body 35.

In addition, the photographed SEM image of the cross section of the positive electrode active material granulated body 35 is converted into monochrome 256 gradations and is binarized by putting a threshold value. By doing so, in the SEM image, the positive electrode active material is represented in white and a gap between positive electrode active material and positive electrode active material and carbon are represented in black.

In the SEM image, against an area of all pixels within the positive electrode active material granulated body 35, an area of a white pixel representing the positive electrode active material is set to be the occupancy rate of the positive electrode active material, i.e., the occupancy rate of the first positive electrode active material particle 30 and the second positive electrode active material particle 31.

### (Electrolyte)

As the electrolyte, the liquid nonaqueous electrolyte or the gel-like nonaqueous electrolyte is used. The liquid nonaqueous electrolyte is prepared by dissolving the electrolyte with an organic solvent. A concentration of the nonaqueous electrolyte is preferably 0.5 mol/l or more and 2.5 mol/l or less. The gel-like nonaqueous electrolyte is prepared by compositing the liquid electrolyte with a polymer material.

Examples of the electrolyte may include lithium salts such as lithium perchlorate (LiClO₄), lithium hexafluorophosphate (LiPF₆), lithium tetrafluoroborate (LiBF₄), lithium arsenic hexafluoride (LiAsF₆), lithium trifluoromethane sulfonate (LiCF₃SO₃), and bistrifluoromethylsulfonylimitrithium [LiN (CF₃SO₂)₂]. The electrolyte is used alone or in combination of two or more kinds. It is preferable that the electrolyte contains lithium hexafluorophosphate (LiPF₆).

Examples of the organic solvent may include cyclic carbonates such as propylene carbonate (PC), ethylene carbonate (EC), and vinylene carbonate; chain carbonates such as diethyl carbonate (DEC), dimethyl carbonate (DMC), and methylethyl carbonate (MEC); cyclic ethers such as tetrahydrofuran (THF), 2 methyltetrahydrofuran (2MeTHF), and dioxolane (DOX); chain ethers such as dimethoxyethane (DME) and diethoethane (DEE); and γ-butyrolactone (GBL), α-methyl-γ-butyrolactone (MBL), acetonitrile (AN), and sulfolane (SL). The organic solvents is used alone or in combination of two or more kinds.

Examples of a more preferable organic solvent may include a mixed solvent obtained by mixing two or more of propylene carbonate (PC), ethylene carbonate (EC), diethyl carbonate (DEC), dimethyl carbonate (DMC), and methylethyl carbonate (MEC), and a mixed solvent including γ-butyrolactone (GBL). By using such a mixed solvent, it is possible to obtain a nonaqueous electrolyte battery excellent in low temperature characteristics.

Examples of the polymer material may include polyvinylidene fluoride (PVdF), polyacrylonitrile (PAN), and polyethylene oxide (PEO).

Further, instead of the nonaqueous electrolyte, it is also possible to use an aqueous solution including an electrolyte containing the lithium salt.

### (Separator)

As the separator 4, for example, a porous film made of a material such as polyethylene, polypropylene, cellulose, and polyvinylidene fluoride (PVdF), a synthetic resin nonwoven fabric, and the like are used. The porous film made of polyethylene or polypropylene is preferable from the viewpoint of the improvement in safety of the nonaqueous electrolyte battery because it can be melted at a predetermined temperature and can cut off a current.

### (Outer Casing Member)

As the outer casing member 2, a baglike container formed of a laminate film or a metal container is used. The outer casing member 2 is a flat shape, a squared shape, a cylindrical shape, a coin shape, a button shape, a sheet shape, a laminate shape, and the like. Furthermore, it can be small batteries loaded on portable electronic devices and the like, and large batteries loaded on two-wheel or four-wheel automobiles and the like.

As the laminate film, a multilayered film having a metal layer interposed between the resin films is used. As the metal layer, an aluminum foil or an aluminum alloy foil is preferable for weight reduction. The resin film may use polymer materials such as polypropylene (PP), polyethylene (PE), nylon, and polyethylene terephthalate (PET). The laminate film is molded in the shape of the outer casing member by performing sealing by heat seal. A thickness of the laminate film is preferably 0.2 mm or less.

The metal container is made of aluminum or an aluminum alloy. It is preferable that the aluminum alloy includes elements such as magnesium, zinc, and silicon. In contrast, the content of transition metal such as iron, copper, nickel, and chromium is preferably 100 ppm or less. By doing so, it is possible to dramatically improve long-term reliability and heat dissipation performance of the metal container under the high temperature environment. A thickness of the metal container is preferably 0.5 mm or less. The thickness of the metal container is preferably 0.2 mm or less.

### (Positive electrode terminal)

The positive electrode terminal 7 is electrically stable in the range in which a potential for the lithium ion metal is 3.0V or more and 4.5V or less. The positive electrode terminal 7 is made of a material having conductivity. The positive electrode terminal 7 is made of an aluminum alloy including one kind or plural kinds of elements such as Mg, Ti, Zn, Mn, Fe, Cu, and Si. In order to reduce the contact resistance with the positive electrode current collector 5a, it is preferable that the positive electrode terminal 7 is made of the same material as the positive electrode current collector 5a.

### (Negative electrode terminal)

The negative electrode terminal 6 is electrically stable in the range in which a potential for the lithium ion metal is 1.0V or more and 3.0V or less. The negative electrode terminal 6 is made of a material having conductivity. The negative electrode terminal 6 is made of an aluminum alloy including one kind or plural kinds of elements such as Mg, Ti, Zn, Mn, Fe, Cu, and Si. In order to reduce the contact resistance with the negative electrode current collector 3a, the negative electrode terminal 6 is made of the same material as the negative electrode current collector 3a.

According to the above embodiment, it is possible to provide the nonaqueous electrolyte battery excellent in charging/discharging characteristics under the high temperature environment.

### (Second Embodiment)

A battery pack will be described with reference to the drawings.

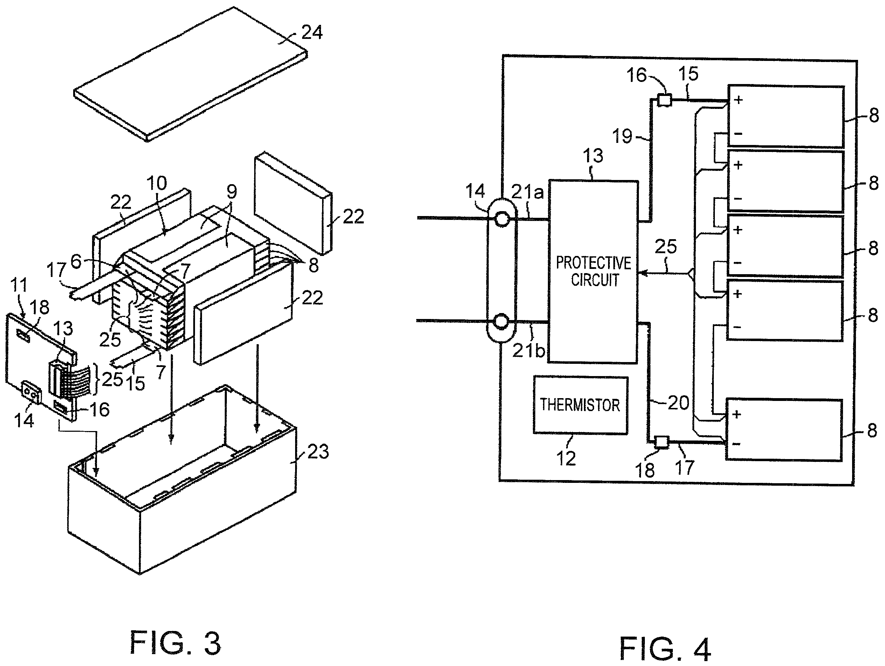

Fig. 3 is an exploded perspective view of the battery pack.

The unit battery 8 is configured of the nonaqueous electrolyte battery.

As illustrated in Fig. 3, the plurality of unit batteries 8 are laminated so that the negative electrode terminal 6 and the positive electrode terminal 7 extending to the outside are aligned in the same direction. The plurality of unit batteries 8 are fastened to each other with an adhesive tape 9 to configure an assembled battery 10.

The battery pack has one or a plurality of unit batteries 8 described above. In the case of including a plurality of unit batteries 8, each of the unit batteries 8 is electrically connected in series, in parallel, or in a serial-parallel combination.

The battery pack may further include a protective circuit. The protective circuit controls the charging/discharging of the nonaqueous electrolyte battery 8. Alternatively, a circuit included in a device that uses the battery pack as a power supply (e.g., an electronic device, an automobile and the like) can also be used as a protective circuit of the battery pack.

In addition, the battery pack may further include an external terminal for energization. The external terminal for energization is provided to output a current from the unit battery 8 to the outside and input a current to the unit battery 8. In other words, when the battery pack is used as a power supply, the current is supplied to the outside through an external terminal for energization. In addition, when the battery pack is charged, a charging current (including regenerative energy of power of the automobile) is supplied to the battery pack through the external terminal for energization.

Fig. 4 illustrates a block diagram of an electric circuit of the battery pack of Fig. 3.

As illustrated in Fig. 4, the unit batteries 8 are electrically connected in series.

As illustrated in Fig. 3, a printed wiring board 11 is disposed to face a side surface of the unit battery 8 from which the negative electrode terminal 6 and the positive electrode terminal 7 extend. A thermistor 12, a protective circuit 13, and an energizing terminal 14 to external devices are mounted on the printed wiring board 11. In order to avoid an unnecessary connection with the wirings of the assembled battery 10, an insulating plate (not illustrated) is attached to a surface of the printed wiring board 11 facing the assembled battery 10.

A positive electrode side lead 15 is connected to the positive electrode terminal 7 located at a lowermost layer of the assembled battery 10. A tip of the positive electrode side lead 15 is inserted into a positive electrode side connector 16 of the printed wiring board 11 and connected thereto.

A negative electrode side lead 17 is connected to the negative electrode terminal 6 located at an uppermost layer of the assembled battery 10. A tip of the negative electrode side lead 17 is inserted into a negative electrode side connector 18 of the printed wiring board 11 and connected thereto. The positive electrode side connector 16 and the negative electrode side connector 18 are connected to the protective circuit 13 by wirings 19 and 20 that are formed on the printed wiring board 11.

The thermistor 12 detects the temperature of the unit battery 8. The detection signal of the thermistor 12 is transmitted to the protective circuit 13.

When overcharge, overdischarge, overcurrent and the like of the unit battery 8 are detected, the protective circuit 13 can disconnect a positive side wiring 21a and a negative side wiring 21b between the protective circuit 13 and the energizing terminal 14 to the external device.

The detection of the overcharge and the like is performed for each of the unit batteries 8 or the entire unit battery 8. To detect each of the unit batteries 8, a battery voltage may be detected, or a positive electrode potential or a negative electrode potential may be detected. When the positive electrode potential or the negative electrode potential is detected, a lithium electrode used as a reference electrode is inserted into each unit battery 8. In the case of Figs. 3 and 4, a wiring 25 for the voltage detection is connected to each of the unit batteries 8, and a detection signal is transmitted to the protective circuit 13 through the wiring 25.

Protective sheets 22 made of rubber or resin are respectively disposed on three side surfaces of' the assembled battery 10 excluding the side surface from which the positive electrode terminal 7 and the negative electrode terminal 6 protrude.

The assembled battery 10 is housed in a housing container 23 together with the respective protective sheets 22 and the printed wiring board 11. Namely, the protective sheets 22 are each disposed on inner side surfaces of both sides in a long side direction and an inner side surface of one side in a short side direction of the housing container 23. The printed wiring board 11 is disposed on an inner side surface of the other side in the short side direction of the housing container 23.

The assembled battery 10 is located within a space surrounded by the protective sheet 22 and the printed wiring board 11. A lid 24 is attached to an upper surface of the housing container 23.

For the fixing of the assembled battery 10, a thermal shrinkage tape may be used in place of the adhesive tape 9. In this case, the protective sheets 22 are disposed on both side surfaces of the assembled battery 10. After winding the thermal shrinkage tape around both side surfaces of the assembled battery 10, the thermal shrinkage tape is thermally shrunk to fasten the assembled battery 10.

To increase the battery capacity, the unit batteries 8 may be connected in parallel. Alternatively, a combination of the series connection of the unit batteries 8 and the parallel connection of the unit batteries 8 may be allowed. It is possible to connect the battery packs in series or in parallel.

It is preferable that the battery pack exhibits excellent cycle characteristics when outputting a large current. Specifically, the battery pack may be used for a power supply of a digital camera or used for on-vehicle use such as two-wheel to four-wheel hybrid electric vehicles, two-wheel to four-wheel electric vehicles, assist bicycles and the like, and railway vehicles and the like. In particular, the battery back is suitable for the on-vehicle use.

In vehicles such as the automobile and the like which is equipped with the battery pack, for example, the battery pack is to recover regenerative energy of power of the automobile. Examples of the vehicle may include two-wheel to four-wheel hybrid electric vehicles, two-wheel to four-wheel electric vehicles, and the assist bicycles and an electric train.

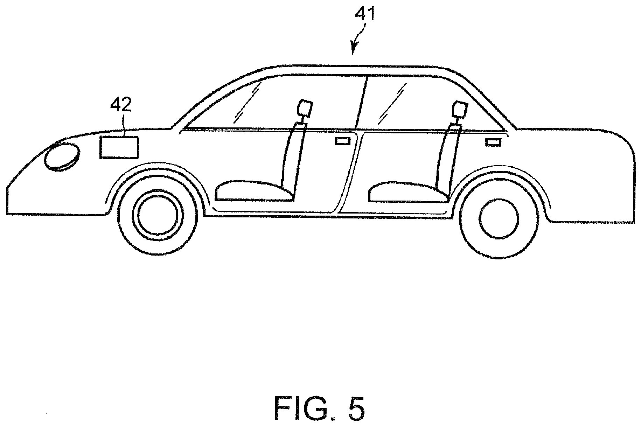

Fig. 5 illustrates an example of an automobile equipped with the battery pack of an example according to the second embodiment.

In an automobile 41 illustrated in Fig. 5, a battery pack 42 of an example according to the second embodiment is mounted in the engine room in front of a vehicle body. The mounting position of the battery pack in the automobile is not limited to the engine room. For example, the battery pack can be mounted at a rear part of the vehicle body or under a seat of the automobile.

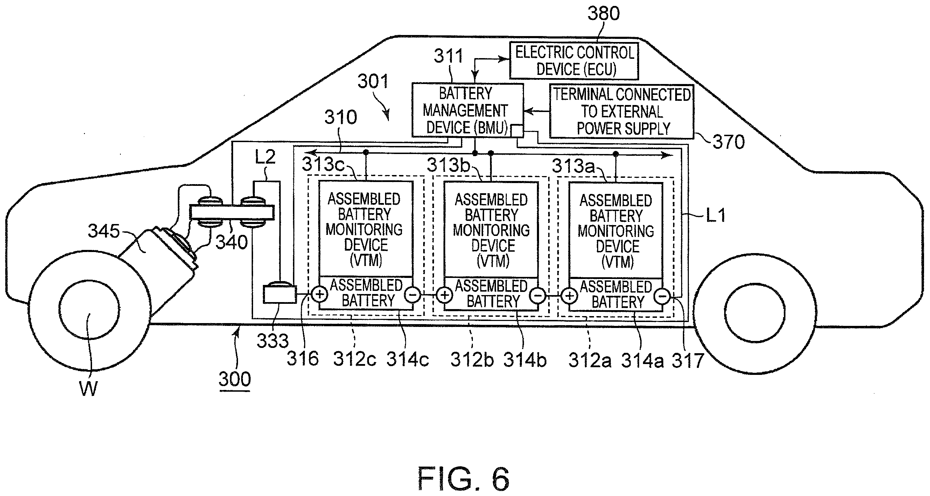

In addition, Fig. 6 illustrates a vehicle 300 equipped with the battery pack of an example according to the second embodiment.

Fig. 6 is a diagram schematically illustrating a configuration of a vehicle equipped with the battery pack of an example according to the second embodiment. A vehicle 300 illustrated in Fig. 6 is an electric vehicle.

The vehicle 300 illustrated in Fig. 6 includes a vehicle power supply 301, a vehicle ECU (ECU: Electric Control Unit) 380 which is an upper level control device of the vehicle power supply 301, an external terminal 370, an inverter 340, and a drive motor 345.

In the vehicle 300, for example, the vehicle power supply 301 is mounted in the engine room or at a rear part of a vehicle body or under a seat of an automobile. However, in Fig. 6, mounting places of the nonaqueous electrolyte battery in the vehicle 300 are schematically illustrated.

The vehicle power supply 301 includes a plurality (for example, three) of battery packs 312a, 312b, and 312c, a battery management device (BMU: Battery Management Unit) 311, and a communication bus 310.

The three battery packs 312a, 312b, and 312c are electrically connected in series. The battery pack 312a includes an assembled battery 314a and an assembled battery monitoring device (VTM: Voltage Temperature Monitoring) 313a. The battery pack 312b includes an assembled battery 314b and an assembled battery monitoring device 313b. The battery pack 312c includes an assembled battery 314c and an assembled battery monitoring device 313c. The battery packs 312a, 312b, and 312c can each be detached independently and can be replaced with another battery pack.

Each of the assembled batteries 314a to 314c includes a plurality of nonaqueous electrolyte batteries connected in series. Each of the nonaqueous electrolyte batteries is a battery that is manufactured in the same manufacturing procedure as a manufacturing procedure of the nonaqueous electrolyte battery of the second embodiment. The assembled batteries 314a to 314c are each charged and discharged through the positive electrode terminal 316 and the negative electrode terminal 317.

In order to collect information on maintenance of the vehicle power supply 301, the battery management device 311 performs communications between the assembled battery monitoring device 313a to 313c to collect information such as the voltage, temperature, and the like of the nonaqueous electrolyte batteries of the assembled batteries 314a to 314c included in the vehicle power supply 301.

The communication bus 310 is connected between the battery management device 311 and the assembled battery monitoring device 313a to 313c. The communication bus 310 is configured so that a set of communication lines are shared at a plurality of nodes (battery management device and one or more assembled monitoring devices). The communication bus 310 is a communication bus configured based on the control area network (CAN) standard, for example.

The assembled battery monitoring devices 313a to 313c measure the voltage and temperature of each of the nonaqueous electrolyte batteries configuring the assembled batteries 314a to 314c based on command by the communication from the battery management device 311. However, the temperature can be measured only at a few points per assembled battery and it is acceptable that the temperature of all the nonaqueous electrolyte batteries need not be measured.

The vehicle power supply 301 can also have an electromagnetic contactor (e.g., a switch device 333 illustrated in Fig. 6) for connecting or disconnecting between the positive electrode terminal and the negative electrode terminal. The switch device 333 includes a precharge switch (not illustrated) that is turned on when the assembled batteries 314a to 314c are charged and a main switch (not illustrated) that is turned on when an output of a battery is supplied to a load. The precharge switch and the main switch are provided with a relay circuit (not illustrated) that is turned on and off by a signal supplied to a coil disposed in the vicinity of the switch element.

The inverter 340 converts the input DC voltage into a three-phase AC high voltage for driving a motor. The inverter 340 controls an output voltage based on a control signal from the battery management device 311 or the vehicle ECU 380 controlling the whole operation of the vehicle. The three-phase output terminals of the inverter 340 are connected to each of the three-phase input terminals of the drive motor 345.

The drive motor 345 rotates by electric power supplied from the inverter 340, and transmits the rotation to the vehicle axis and drive wheel W via a differential gear unit, for example.

In addition, although not illustrated, the vehicle 300 includes a regenerative braking mechanism that rotates the drive motor 345 and converts kinetic energy into regenerative energy as electric energy when braking the vehicle 300. The regenerative energy that is recovered by the regenerative braking mechanism is input to the inverter 340 and converted into a direct current. The direct current is input to the vehicle power supply 301.

One terminal of a connection line L1 is connected to the negative electrode terminal 317 of the vehicle power supply 301. The connection line L1 is connected to a negative electrode input terminal of the inverter 340 via a current detector (not illustrated) in the battery management device 311.

One terminal of a connection line L2 is connected to a positive electrode terminal 316 of the vehicle power supply 301 via the switch device 333. The other terminal of the connection line L2 is connected to a positive electrode input terminal of the inverter 340.

The external terminal 370 is connected to the battery management device 311. The external terminal 370 can be connected to, for example, an external power supply.

The vehicle ECU 380 controls the whole vehicle by cooperatively controlling the battery management device 311 with other devices in response to an operation input by a driver and the like. Data about the maintenance of the vehicle power supply 301 such as the remaining capacity of the vehicle power supply 301 are transmitted between the battery management device 311 and the vehicle ECU 380 through the communication line.

According to the second embodiment described above, since it includes the nonaqueous electrolyte battery of the first embodiment, it is possible to provide a battery pack which is excellent in safety and charge/discharge cycle life even under the high temperature environment.

Examples will be described below, but the present invention is not limited to the examples described below as long as the gist of the present invention is not exceeded.

The following Table 1 shows the positive electrode active material, the presence or absence of the first positive electrode active material particle, the presence or absence of the second positive electrode active material particle, an average particle diameter of the positive electrode active material granulated body, and the occupancy rate of the first positive electrode active material particle and the second positive electrode active material particle in positive electrode active material granulated body, the negative electrode active material, a 60°C cycle life, and a 25°C output density, in Examples 1 to 16 and Comparative Examples 1 to 19 to be described below.

### (Example 1)

### <Production of Positive Electrode>

As the positive electrode active material, a lithium nickel composite oxide (LiNi_{0.34}Co_{0.33}Mn_{0.33}O₂) was used. By spraying an aqueous solution in which an acrylic binder was dispersed onto the surface of a primary particle of the positive electrode active material, a positive electrode active material granulated body was obtained using the tumbling fluidized bed granulation-coating machine. Next, by spraying an aqueous solution in which acetylene black and an acrylic binder were dispersed onto the positive electrode active material granulated body, a positive electrode active material aggregated body which is not baked and has the carbon layer formed on the surface thereof was obtained using the tumbling fluidized bed granulation-coating machine. Then, the positive electrode active material granulated body 35 was obtained by baking the positive electrode active material aggregated body. At this time, by setting the temperature rising rate at the time of baking of the positive electrode active material granulated body 35 to be slower as compared with the conventional and setting the powder strength of the positive electrode active material granulated body 35 to be 100 MPa or less, the occupancy rate of the positive electrode active material of the positive electrode active material granulated body 35 in the positive electrode was set to be 98%.

With respect to 90 mass% of the obtained positive electrode active material granulated body 35, as a conductive agent, 3 mass% of acetylene black and 3 mass% of graphite were used. As the binder, 4 mass% of polyvinylidene fluoride (PVdF) was used. The above components were added to N-methyl-2-pyrrolidone (NMP) and mixed to prepare slurry. The slurry was applied to both surfaces of the positive electrode current collector 5a made of an aluminum foil having a thickness of 15 µm, and dried. In addition, the dried slurry was baked and pressed to produce the positive electrode 5.

### <Production of Negative Electrode>

As the negative electrode active material, 90 mass% of lithium titanate powder having a spinel type structure was used. As the conductive agent, 7 mass% of graphite was used, and as the binder, 3 mass% of polyvinylidene fluoride (PVdF) was used. The above components were mixed with N-methyl-2-pyrrolidone (NMP) to prepare the slurry. The slurry was applied to both surfaces of the negative electrode current collector 3a made of an aluminum foil having a thickness of 15 µm, dried, and pressed to obtain the negative electrode 3.

### <Production of Electrode Group>

As the separator 4, a cellulose nonwoven fabric having a thickness of 25 µm was used.

A laminate was obtained by laminating the positive electrode 5, the separator 4, the negative electrode 3, and the separator 4 in this order. Next, the laminate was spirally wound. The flat electrode group was produced by heating and pressing the laminate at 80°C. The obtained electrode group was housed in a pack formed of a laminate film which has a three layer structure of a nylon layer/aluminum layer/polyethylene layer and having a thickness of 0.1 mm, and dried in vacuum at 80°C for 16 hours.

### <Preparation of Nonaqueous Electrolyte>

A nonaqueous electrolytic solution was obtained by dissolving 1 mol/L of LiPF₆ as an electrolyte in a mixed solvent (volume ratio 1: 2) of propylene carbonate (PC) and diethyl carbonate (DEC). After the nonaqueous electrolytic solution is injected into the laminate film pack housing the electrode group, the laminate film pack was completely sealed by heat sealing.

As described above, the nonaqueous electrolyte secondary battery of Example 1 was produced.

### (Examples 2 to 5)

Examples 2 to 5 are different from the above Example 1 in the occupancy rate of the positive electrode active material in the positive electrode active material granulated body 35 by controlling the temperature rising rate at the time of baking the positive electrode active material granulated body 35 or the temperature at the time of baking the positive electrode active material granulated body 35. Other production methods were the same as the above Example 1.

### (Examples 6 to 9)

Examples 6 to 9 are different from the above Example 1 in the average particle diameter of the positive electrode active material granulated body 35 included in the positive electrode active material layer 5b. Other production methods were the same as the above Example 1.

### (Examples 10 to 13)

As the positive electrode active material, the oxides shown in the following Table 1 were used. Other production methods of the nonaqueous electrolyte secondary battery were the same as in the above Example 1.

### (Examples 14 to 16)

As the negative electrode active material, the oxides shown in the following Table 1 were used. Other production methods of the nonaqueous electrolyte secondary battery were the same as in the above Example 1.

### (Comparative Examples 1 and 2)

Comparative Examples 1 and 2 correspond to the case in which the occupancy rate of the positive electrode active material in the positive electrode active material granulated body 35 of the above Examples deviates from 70% or more and 98% or less. Other production methods of the nonaqueous electrolyte secondary battery were the same as in the above Example 1.

### (Comparative Examples 3 to 13)

Comparative Examples 3 to 13 correspond to the case in which the presence or absence of the first positive electrode active material particle 30 and the second positive electrode active material particle 31 and the average particle diameter of the positive electrode active material granulated body 35 were changed. Other production methods of the nonaqueous electrolyte secondary battery were the same as in the above Example 1.

### (Comparative Examples 14 to 16)

As the positive electrode active material, the oxides shown in the following Table 1 were used. In addition, the second positive electrode active material particle 31 is absent. Other production methods of the nonaqueous electrolyte secondary battery were the same as in the above Example 1.

### (Comparative Examples 17 to 19)

As the negative electrode active material, the oxides shown in the following Table 1 were used. In addition, the second positive electrode active material particle 31 is absent. Other production methods of the nonaqueous electrolyte secondary battery were the same as in the above Example 1.

### (Cycle charge/discharge test·Output characteristics test)

A cycle charge/discharge test and output characteristics test were performed on each of the nonaqueous electrolyte batteries of the above Examples and the Comparative Examples. In the cycle charge/discharge test, the charging and discharging was repeatedly performed at a rate of 1C under the environment of 60°C. In the output characteristics test, the charge depth was adjusted to 50%, and then the voltage drop was measured when the discharging is performed at a discharge rate of 10C for 10 seconds.

**[Table 1]**

| | POSITIVE ELECTRODE ACTIVE MATERIAL | FIRST POSITIVE ELECTRODE ACTIVE MATERIAL PARTICLE | SECOND POSITIVE ELECTRODE ACTIVE MATERIAL PARTICLE | AVERAGE PARTICLE DIAMETER OF POSITIVE ELECTRODE ACTIVE MATERIAL GRANULATED BODY (*µ*m) | OCCUPANCY OF ACTIVE MATERIAL PARTICLE IN POSITIVE ELECTRODE ACTIVE MATERIAL GRANULATED BODY (%) | NEGATIVE ELECTRODE ACTIVE MATERIAL | 60°C CYCLE LIFE (TIMES) | 25°C OUTPUT DENSITY (W/kg) |
|---|---|---|---|---|---|---|---|---|
| EXAMPLE 1 | LiNi_{0.34}Co_{0.33}Mn_{0.33}O₂ | PRESENCE | PRESENCE | 10 | 98 | Li₄Ti₅O₁₂ | 3100 | 2900 |
| EXAMPLE 2 | LiNi_{0.34}Co_{0.33}Mn_{0.33}O₂ | PRESENCE | PRESENCE | 10 | 95 | Li₄Ti₅O₁₂ | 3100 | 3000 |
| EXAMPLE 3 | LiNi_{0.34}Co_{0.33}Mn_{0.33}O₂ | PRESENCE | PRESENCE | 10 | 90 | Li₄Ti₅O₁₂ | 3000 | 3000 |
| EXAMPLE 4 | LiNi_{0.34}Co_{0.33}Mn_{0.33}O₂ | PRESENCE | PRESENCE | 10 | 80 | Li₄Ti₅O₁₂ | 2900 | 3100 |
| EXAMPLE 5 | LiNi_{0.34}Co_{0.33}Mn_{0.33}O₂ | PRESENCE | PRESENCE | 10 | 70 | Li₄Ti₅O₁₂ | 2900 | 3200 |
| EXAMPLE 6 | LiNi_{0.34}Co_{0.33}Mn_{0.33}O₂ | PRESENCE | PRESENCE | 3 | 90 | Li₄Ti₅O₁₂ | 2900 | 3200 |
| EXAMPLE 7 | LiNi_{0.34}Co_{0.33}Mn_{0.33}O₂ | PRESENCE | PRESENCE | 5 | 90 | Li₄Ti₅O₁₂ | 2900 | 3100 |
| EXAMPLE 8 | LiNi_{0.34}Co_{0.33}Mn_{0.33}O₂ | PRESENCE | PRESENCE | 15 | 90 | Li₄Ti₅O₁₂ | 3100 | 2900 |
| EXEMPLE 9 | LiNi_{0.34}Co_{0.33}Mn_{0.33}O₂ | PRESENCE | PRESENCE | 20 | 90 | Li₄Ti₅O₁₂ | 3100 | 2700 |
| EXAMPLE 10 | LiNi_{0.34}Co_{0.33}Mn_{0.33}O₂ | PRESENCE | PRESENCE | 10 | 90 | Li₄Ti₅O₁₂ | 2000 | 2800 |
| EXAMPLE 11 | LiCoO₂ | PRESENCE | PRESENCE | 10 | 90 | Li₄Ti₅O₁₂ | 2500 | 3000 |
| EXAMPLE 12 | Li_{1.33}Mn_{0.67}O₂ | PRESENCE | PRESENCE | 10 | 90 | Li₄Ti₅O₁₂ | 2500 | 2500 |
| EXAMPLE 13 | LiNi_{0.85}Co_{0.1}Mn_{0.05}O₂ | PRESENCE | PRESENCE | 10 | 90 | Li₄Ti₅O₁₂ | 2000 | 2700 |
| EXAMPLE 14 | LiNi_{0.34}Co_{0.33}Mn_{0.33}O₂ | PRESENCE | PRESENCE | 10 | 90 | TiO₂(B) | 2800 | 2800 |
| EXAMPLE 15 | LiNi_{0.34}Co_{0.33}Mn_{0.33}O₂ | PRESENCE | PRESENCE | 10 | 90 | Li₂Na₂ Ti₆O₁₄ | 2800 | 2900 |
| EXAMPLE 16 | LiNi_{0.34}Co_{0.33}Mn_{0.33}O₂ | PRESENCE | PRESENCE | 10 | 90 | Nb₂TiO₇ | 2800 | 2800 |
| COMPARATIVE EXAMPLE 1 | LiNi_{0.34}Co_{0.33}Mn_{0.33}O₂ | PRESENCE | PRESENCE | 10 | 99 | Li₄Ti₅O₁₂ | 3100 | 2500 |
| COMPARATIVE EXAMPLE 2 | LiNi_{0.34}Co_{0.33}Mn_{0.33}O₂ | PRESENCE | PRESENCE | 10 | 65 | Li₄Ti₅O₁₂ | 2300 | 3200 |
| COMPARATIVE EXAMPLE 3 | LiNi_{0.34}Co_{0.33}Mn_{0.33}O₂ | ABSENCE | PRESENCE | 3 | 90 | Li₄Ti₅O₁₂ | 2900 | 2700 |
| COMPARATIVE EXAMPLE 4 | LiNi_{0.34}Co_{0.33}Mn_{0.33}O₂ | PRESENCE | ABSENCE | 3 | 90 | Li₄Ti₅O₁₂ | 1900 | 3200 |
| COMPARATIVE EXAMPLE 5 | LiNi_{0.34}Co_{0.33}Mn_{0.33}O₂ | ABSENCE | PRESENCE | 5 | 90 | Li₄Ti₅O₁₂ | 2900 | 2600 |
| COMPARATIVE EXAMPLE 6 | LiNi_{0.34}Co_{0.33}Mn_{0.33}O₂ | PRESENCE | ABSENCE | 5 | 90 | Li₄Ti₅O₁₂ | 2000 | 3100 |
| COMPARATIVE EXAMPLE 7 | LiNi_{0.34}Co_{0.33}Mn_{0.33}O₂ | ABSENCE | PRESENCE | 10 | 90 | Li₄Ti₅O₁₂ | 3000 | 2500 |
| COMPARATIVE EXAMPLE 8 | LiNi_{0.34}Co_{0.33}Mn_{0.33}O₂ | PRESENCE | ABSENCE | 10 | 90 | Li₄Ti₅O₁₂ | 2200 | 3000 |
| COMPARATIVE EXAMPLE 9 | LiNi_{0.34}Co_{0.33}Mn_{0.33}O₂ | ABSENCE | PRESENCE | 15 | 90 | Li₄Ti₅O₁₂ | 3100 | 2100 |
| COMPARATIVE EXAMPLE 10 | LiNi_{0.34}Co_{0.33}Mn_{0.33}O₂ | PRESENCE | ABSENCE | 15 | 90 | Li₄Ti₅O₁₂ | 2200 | 2900 |
| COMPARATIVE EXAMPLE 11 | LiNi_{0.34}Co_{0.33}Mn_{0.33}O₂ | ABSENCE | PRESENCE | 20 | 90 | Li₄Ti₅O₁₂ | 3100 | 2000 |
| COMPARATIVE EXAMPLE 12 | LiNi_{0.34}Co_{0.33}Mn_{0.33}O₂ | PRESENCE | ABSENCE | 20 | 90 | Li₄Ti₅O₁₂ | 2200 | 2700 |
| COMPARATIVE EXAMPLE 13 | LiNi_{0.8}Co_{0.1}Mn_{0.1}O₂ | PRESENCE | ABSENCE | 10 | 90 | Li₄Ti₅O₁₂ | 1600 | 2800 |
| COMPARATIVE EXAMPLE 14 | LiCoO₂ | PRESENCE | ABSENCE | 10 | 90 | Li₄Ti₅O₁₂ | 1900 | 3000 |
| COMPARATIVE EXAMPLE 15 | Li_{1.33}Mn_{0.67}O₂ | PRESENCE | ABSENCE | 10 | 90 | . Li₄Ti₅O₂ | 1700 | 2500 |
| COMPARATIVE EXAMPLE 16 | LiNi_{0.85}Co_{0.1}Al_{0.05}O₂ | PRESENCE | ABSENCE | 10 | 90 | Li₄Ti₅O₁₂ | 1500 | 2700 |
| COMPARATIVE EXAMPLE 17 | LiNi_{0.34}Co_{0.33}Mn_{0.33}O₂ | PRESENCE | ABSENCE | 10 | 90 | TiO₂(B) | 2000 | 2800 |
| COMPARATIVE EXAMPLE 18 | LiNi_{0.34}Co_{0.33}Mn_{0.33}O₂ | PRESENCE | ABSENCE | 10 | 90 | Li₂Na₂Ti₆O₁₄ | 2100 | 2900 |
| COMPARATIVE EXAMPLE 19 | LiNi_{0.34}Co_{0.33}Mn_{0.33}O₂ | PRESENCE | ABSENCE | 10 | 90 | Nb₂TiO₇ | 2000 | nn.n. |

In the case of the above Examples 1 to 9 in which LiNi_{0.34}Co_{0.33}Mn_{0.33}O₂ was used as the positive electrode active material and Li₄Ti₅O₁₂ was used as the negative electrode active material, a high cycle life of 2900 to 3100 times was realized. Unlike the above Examples 1 to 9, in the case of the above Examples 10 to 16 in which any one of the positive electrode active material and the negative electrode active material was changed, the cycle life was 2000 to 2800 times. Therefore, it may be said that the case in which LiNi_{0.34}Co_{0.33}Mn_{0.33}O₂ was used as the positive electrode active material and Li₄Ti₅O₁₂ was used as the negative electrode active material is optimal. In addition, in the case of Examples 1 to 9, the output density was 2700 to 3200 W/kg, which is a high value.

In addition, in the above Comparative Examples, it is understood that the cycle life is reduced in the case in which the carbon-coated second positive electrode active material particle 31 is absent. The reason is that when the carbon-coated second positive electrode active material particle 31 exists, the disconnection of the electron conduction path accompanied by the charge/discharge cycle is reduced, and the number of isolated positive electrode active materials that do not contribute to the charging/discharging is reduced.

Therefore, in the case in which the carbon-coated second positive electrode active material particle 31 exists as in the above Examples, it was possible to realize the nonaqueous electrolyte battery in which the high cycle life and the excellent output characteristics are compatible.

As described, according to the embodiments, an electrode for a secondary battery, a secondary battery, a battery pack, and a vehicle capable of realizing high cycle life and excellent output characteristics are obtained.

While several embodiments of the present invention have been described, these embodiments have been presented by way of example and are not intended to limit the scope of the invention. These embodiments may be practiced in various other forms, and various omissions, substitutions, and changes thereof can be made without departing from the gist of the invention. These embodiments and their variations are included in the scope or gist of the description as well as within the invention described in the claims and the equivalent scope thereof.

## Claims

1. An electrode for a secondary battery comprising:
a positive electrode active material layer including a positive electrode active material granulated body comprising first positive electrode active material particles and second positive electrode active material particles of which surfaces are coated with carbon,
wherein an occupancy rate of the first positive electrode active material particles and the second positive electrode active material particles in the positive electrode active material granulated body is 70% or more and 98% or less.

2. The electrode according to claim 1, wherein in the positive electrode active material granulated body, a plurality of second positive electrode active material particles exist at an outer circumference of an aggregated body of a plurality of first positive electrode active material particles.

3. The electrode according to claim 1 or 2, wherein the surfaces of the second positive electrode active material particles are partly coated with carbon.

4. The electrode according to any one of claims 1 to 3, wherein the first positive electrode active material particles and the second positive electrode active material particles include LiₓMO₂ (M is at least one element selected from the group consisting of Ni, Co, Mn, and Al, and 0 ≤ x ≤ 1.33).

5. The electrode according to any one of claims 1 to 4, wherein in the positive electrode active material granulated body, a ratio of the number of first positive electrode active material particles to a sum of the number of first positive electrode active material particles and the number of second positive electrode active material particles is 0.2 or more and 0.8 or less.

6. The electrode according to any one of claims 1 to 5, wherein the positive electrode active material layer further comprises a conductive agent and a binder.

7. The electrode according to any one of claims 1 to 6, wherein the electrode is a positive electrode.

8. A secondary battery comprising:
a positive electrode for a secondary battery according to any one of claims 1 to 7 and a negative electrode.

9. A battery pack comprising the secondary battery according to claim 8.

10. The battery pack according to claim 9, further comprising:
an external terminal for energization and a protective circuit.

11. The battery pack according to claim 9 or 10, wherein the battery pack comprises a plurality of secondary batteries and the secondary batteries are electrically connected in series, in parallel, or in a serial-parallel combination.

12. A vehicle equipped with the battery pack according to any one of claims 9 to 11.

13. The vehicle according to claim 12, wherein the battery pack recovers regenerative energy of power of the vehicle.
